# EUROPEAN PATENT APPLICATION

(11) **EP 3 789 188 A1**
(43) Date of publication of application: **10.03.2021**
(21) Application number: 19195647.3
(22) Date of filing: 05.09.2019
(51) Int. Cl.: B29C 65/34, B65B 51/14, B65D 81/20

(54) **APPARTUS FOR SEALING A VACUUM BAG, VACUUM BAG, AND METHOD FOR SEALING A VACUUM BAG**

(71) Applicant: Vestel Elektronik Sanayi ve Ticaret A.S., 45030 Manisa (TR)
(72) Inventor: KAHYAOGLU, Mert, 45030 Manisa (TR); KAHYAOGLU, Merve, 45030 Manisa (TR)
(74) Representative: Maikowski & Ninnemann Patentanwälte Partnerschaft mbB

(57) **Abstract**

The present disclosure relates to an apparatus (100) for sealing a vacuum bag (200), comprising: a first electrically conductive element (112) and a second electrically conductive element (114) spaced apart from the first electrically conductive element (112), wherein the first electrically conductive element (112) is configured to contact a first electrical terminal (212) of the vacuum bag (200) and the second electrically conductive element (114) is configured to contact a second electrical terminal (214) of the vacuum bag (200) to seal the vacuum bag (200).

## Description

### FIELD

Embodiments of the present disclosure relate to an apparatus for sealing a vacuum bag, a vacuum bag, and a method for sealing a vacuum bag. Embodiments of the present disclosure particularly relate to a vacuum-tight sealing of a vacuum bag for storing items such as food.

### BACKGROUND

In vacuum packing, air is removed from a package prior to sealing. The packing involves placing items such as food in a plastic bag, removing air from the inside, and sealing the bag. In particular, the bag is heated with a heater, and thus the bag melts and is closed.

In conventional devices, the heater is provided at the vacuum mechanism. However, over time, some elements of the mechanism, such as a Teflon tape, wear off and must be changed. If the heater cannot be exchanged by a user, the mechanism might not work in a reliable manner anymore. Further, the fixed heater results in considerable energy loss when the bag is sealed. Furthermore, if the mechanism is integrated in a refrigerator and there is a problem with the mechanism e.g. leading to a fire risk, the refrigerator has to be disconnected from power and the customer service has to be called.

In view of the above, new apparatuses for sealing a vacuum bag, vacuum bags, and methods for sealing a vacuum bag that overcome at least some of the problems in the art are beneficial.

### SUMMARY

In light of the above, an apparatus for sealing a vacuum bag, a vacuum bag, and a method for sealing a vacuum bag are provided.

It is an object of the present disclosure to provide an improved sealing mechanism for a vacuum bag, and in particular a vacuum bag for storing items such as food.

Further objects, aspects, benefits, and features of the present disclosure are apparent from the claims, the description, and the accompanying drawings.

According to an independent aspect of the present disclosure, an apparatus for sealing a vacuum bag, and particularly a vacuum bag for storing food items, is provided. The apparatus includes a first electrically conductive element and a second electrically conductive element spaced apart from the first electrically conductive element. The first electrically conductive element is configured to contact a first electrical terminal of the vacuum bag and the second electrically conductive element is configured to contact a second electrical terminal of the vacuum bag to seal the vacuum bag.

According to another independent aspect of the present disclosure, a vacuum bag, and particularly a vacuum bag for storing food items, is provided. The vacuum bag includes a first electrical terminal and a second electrical terminal, and at least one conductive wire having a first end connected to the first electrical terminal and a second end connected to the second electrical terminal. The at least one conductive wire is configured to be heated by a current flowing between the first electrical terminal and the second electrical terminal to seal the vacuum bag essentially vacuum-tight.

According to a further independent aspect of the present disclosure, a method for sealing a vacuum bag, and particularly a vacuum bag for storing food items, is provided. The method includes contacting a first electrical terminal of the vacuum bag by a first electrically conductive element of a sealing apparatus, and contacting a second electrical terminal of the vacuum bag by a second electrically conductive element of the sealing apparatus; and providing a current to the first electrical terminal and the second electrical terminal via the first electrically conductive element and the second electrically conductive element such that a current flows through at least one conductive wire of the vacuum bag to heat the conductive wire and seal the vacuum bag essentially vacuum-tight.

Embodiments are also directed at devices for carrying out the disclosed methods and include apparatus parts for performing each described method aspect. These method aspects may be performed by way of hardware components, a computer programmed by appropriate software, by any combination of the two or in any other manner. Furthermore, embodiments according to the disclosure are also directed at methods for operating the described apparatus. The methods include method aspects for carrying out every function of the apparatus for sealing the vacuum bag.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows a schematic view of an apparatus for sealing a vacuum bag according to embodiments described herein;
- FIG. 2: shows a schematic view of a vacuum bag according to embodiments described herein;
- FIG. 3: shows a schematic view of an apparatus and a vacuum bag to be sealed by the apparatus according to embodiments described herein; and
- FIG. 4: shows a flowchart of a method for sealing a vacuum bag according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

Conventionally, in order to seal a vacuum bag essentially vacuum-tight, the vacuum bag is heated with an external heater of a sealing apparatus such that a part of the vacuum bag melts and is closed. According to the present disclosure, there is no heater in the sealing apparatus. Instead, the sealing apparatus has two electrically conductive elements which contact respective electrical terminals of the vacuum bag to supply a current to the vacuum bag. The current flows through electrical means of the vacuum bag, such as at least one conductive wire, whereby the electrical means is heated. The heat provided by the electrical means melts a part of the vacuum bag and the vacuum bag is sealed thereby essentially vacuum-tight.

The above configuration provides an improved energy efficiency of the sealing procedure and thus the apparatus. Further, the configuration is safer to operate and more reliable. Furthermore, malfunctions and maintenance costs of the sealing apparatus can be reduced.

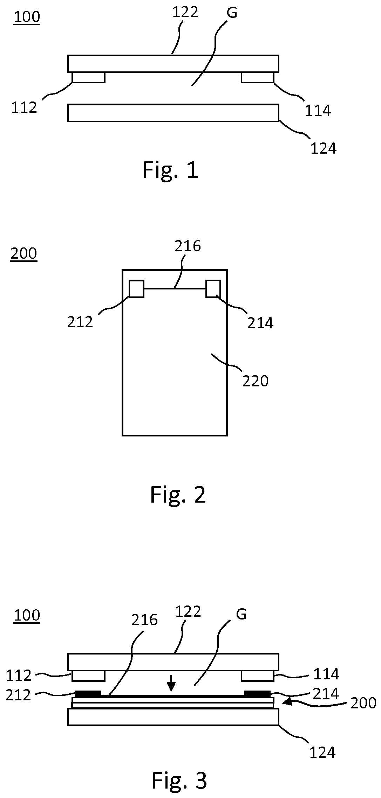

FIG. 1 shows a schematic view of an apparatus 100 for sealing a vacuum bag according to embodiments described herein. The apparatus 100 can also be referred to as a "sealing apparatus".

The apparatus 100 includes a first electrically conductive element 112 and a second electrically conductive element 114 spaced apart from the first electrically conductive element 112. The first electrically conductive element 112 is configured to contact a first electrical terminal of the vacuum bag and the second electrically conductive element 114 is configured to contact a second electrical terminal of the vacuum bag to seal the vacuum bag by applying a current to the first electrical terminal and the second electrical terminal.

In particular, the first electrically conductive element 112 and the second electrically conductive element 114 contact respective electrical terminals of the vacuum bag to supply a current to the vacuum bag. The current flows through electrical/conductive means of the vacuum bag, such as at least one conductive wire, whereby the electrical means is heated. The heat provided by the electrical means melts a part of the vacuum bag and the vacuum bag is sealed thereby.

According to some embodiments, the apparatus 100 further includes a vacuum mechanism (not shown). The vacuum mechanism is configured to remove air from the inside of the vacuum bag to generate a technical vacuum before the vacuum bag is sealed by heat. The vacuum ensures that items placed in the vacuum bag, such as food item, stay longer fresh.

A vacuum is generally understood as a space essentially devoid of matter. The term "vacuum" as used throughout the present application is particularly understood as a technical vacuum, i.e., a region with a gaseous pressure much less than atmospheric pressure.

In some implementations, the apparatus 100 is configured such that an electrical current flows between the first electrically conductive element 112 and the second electrically conductive element 114 when the first electrically conductive element 112 and the second electrically conductive element 114 electrically and mechanically contact the vacuum bag's first electrical terminal and second electrical terminal, respectively.

In particular, the apparatus 100 may be configured to provide the electrical current to heat at least one conductive wire of the vacuum bag to seal the vacuum bag essentially vacuum-tight. For example, the current may flow from the first electrically conductive element 112 to the second electrically conductive element 114, or vice versa, via the vacuum bag's first electrical terminal, second electrical terminal, and at least one conductive wire. The current heats the at least one conductive wire depending on the current and a resistance of the at least one conductive wire such that a part of the material of the vacuum bag melts and seals the vacuum bag essentially vacuum-tight. For example, two opposite side walls of the vacuum bag can be pressed together and heated such that they melt and adhere to each other to provide the vacuum-tight sealing.

In order to provide the current, the apparatus 100 may further include a power source connected to the first electrically conductive element 112 and the second electrically conductive element 114. The power source may be configured to provide a predetermined current which is suitable to heat the at least one conductive wire and melt the part of the vacuum bag without destroying the vacuum bag and/or the vacuum inside of the vacuum bag.

The first electrically conductive element 112 and the second electrically conductive element 114 may be provided at opposite sides of the apparatus 100 with a spacing or distance therebetween. The spacing or distance may be 5cm or more, preferably 10cm or more, and preferably 15cm or more.

According to some embodiments, the distance between the first electrically conductive element 112 and the second electrically conductive element 114 is equal to, or less than, a width of the vacuum bag. This spacing can ensure that the vacuum bag can be sealed along a sufficient distance, and preferably over an entire width of the vacuum bag to maintain the vacuum inside of the vacuum bag.

In some implementations, the distance between the first electrically conductive element 112 and the second electrically conductive element 114 is variable or adjustable. Thereby, the apparatus 100 can be adapted to different bag sizes in a flexible and simple manner.

According to some embodiments, the first electrically conductive element 112 is a conductive plate and/or the second electrically conductive element 114 is a conductive plate. The conductive plate may have a large surface area which allows a reliable contact between the first electrically conductive element 112 and the first electrical terminal of the vacuum bag as well as between the second electrically conductive element 114 and the second electrical terminal of the vacuum bag.

In some implementations, the first electrically conductive element 112 and/or the second electrically conductive element 114, such as the conductive plates, are made of copper.

In some embodiments, the apparatus 100 includes a first portion 122 and a second portion 124 having a gap G therebetween. The first portion 122 may be an upper portion and the second portion 124 may be a lower portion of the apparatus 100. The first portion 122 and the second portion 124 may be moveable with respect to each other. For example, the first portion 112 can be stationary and the second portion 114 can be moveable, or the first portion 112 can be moveable and the second portion 114 can be stationary. Alternatively, both the first portion 112 and the second portion 114 can be moveable. The gap G between the first portion 122 and the second portion 124 may be enlarged or reduced by the relative movement between the first portion 122 and the second portion 124.

The first electrically conductive element 112 and the second electrically conductive element 114 may be provided at the first portion 122 or the second portion 124.

The gap G may be configured such that the vacuum bag can be inserted therein. When the vacuum bag is inserted in the gap G and the first portion 122 and the second portion 124 are moved with respect to each other such that the gap G closes, the first electrically conductive element 112 may come into contact with the first electrical terminal of the vacuum bag and the second electrically conductive element 114 may come into contact with the second electrical terminal of the vacuum bag.

For example, two opposite side walls of the vacuum bag can be pressed together by the first portion 122 and the second portion 124 to fix the bag vacuum therebetween. Once the contacts have been established, the current can be supplied by the apparatus 100 to seal the vacuum bag essentially vacuum-tight by melting a part of the vacuum bag such that the two sidewalls of the vacuum bag adhere to each other.

FIG. 2 shows a schematic view of a vacuum bag 200 according to embodiments described herein.

The vacuum bag 200 includes a first electrical terminal 212 and a second electrical terminal 214. The vacuum bag 200 further includes at least one conductive wire 216 having a first end connected to the first electrical terminal 212 and a second end connected to the second electrical terminal 214. The at least one conductive wire 216 is configured to be heated by a current flowing between the first electrical terminal 212 and the second electrical terminal 214 to seal the vacuum bag 200 by heat.

In particular, the first electrical terminal 212 may be configured to contact the first electrically conductive element of the apparatus described with respect to FIG. 1. Likewise, the second electrical terminal 214 may be configured to contact the second electrically conductive element of the apparatus. The apparatus supplies the current to the first electrical terminal 212 via the first electrically conductive element or to the second electrical terminal 214 via the second electrically conductive element.

According to some embodiments, the first electrical terminal 212 is a conductive plate and/or the second electrical terminal 214 is a conductive plate. The conductive plate may have a large surface area which allows a reliable contact between the first electrically conductive element and the first electrical terminal 212 as well as between the second electrically conductive element and the second electrical terminal 214. In some implementations, the first electrical terminal 212 and/or the second electrical terminal 214 and/or the at least one conductive wire 216 are made of copper.

The at least one conductive wire 216 may have a predetermined resistance. The predetermined resistance is suitable to heat the at least one conductive wire 216 and melt the part of the vacuum bag 200 without destroying the vacuum bag 200 and/or the vacuum inside of the vacuum bag 200.

In particular, the apparatus may be configured to provide the electrical current to heat the at least one conductive wire 216 of the vacuum bag 200 to seal the vacuum bag 200. For example, the current may flow from the first electrically conductive element to the second electrically conductive element, or vice versa, via the vacuum bag's first electrical terminal 212, second electrical terminal 214, and at least one conductive wire 216. The current heats the at least one conductive wire 216 depending on the current and the resistance of the at least one conductive wire 216 such that a part of the material of the vacuum bag melts and seals the vacuum bag essentially vacuum-tight.

According to some embodiments, the at least one conductive wire 216 has a shape selected from the group including, or consisting of, a straight shape, a meandered shape, a wave shape, and combinations thereof. For example, the meandered shape or wave shape may be selected to provide a sealing area with a large width.

In some implementations, the at least one conductive wire 216 is embedded in a material of the vacuum bag 200. For example, the at least one conductive wire 216 can be embedded in one of the two sidewalls of the vacuum bag which are to be adhered to each other to seal the vacuum bag 200 essentially vacuum-tight.

Additionally, or alternatively, the first electrical terminal 212 and/or the second electrical terminal 214 are at least partially embedded in the material of the vacuum bag 200. For example, the first electrical terminal 212 and/or the second electrical terminal 214 can be embedded in one of the two sidewalls of the vacuum bag 200 which are to be adhered to each other to seal the vacuum bag 200 essentially vacuum-tight.

In a preferred embodiment, the at least one conductive wire 216 is embedded in the material of the vacuum bag 200, and the first electrical terminal 212 and the second electrical terminal 214 are provided at an outer surface of the vacuum bag 200. Thereby, the material can be efficiently heated while a current transfer from the apparatus to the first electrical terminal 212 and/or the second electrical terminal 214 can be ensured.

According to some implementations, the vacuum bag 200 is made of a plastic material. The plastic material is configured to be melted by the heat generated by the at least one conductive wire 216 to seal the vacuum bag 200 essentially vacuum tight e.g. by adhering two opposite sidewalls of the vacuum bag 200 to each other.

FIG. 3 shows a schematic view of an apparatus 100 and a vacuum bag 200 to be sealed by the apparatus 100 according to embodiments described herein.

The vacuum bag 200 is inserted in the gap G between the first portion 122 and the second portion 124. Then, the first portion 122 and the second portion 124 are moved with respect to each other such that the gap G closes. The first electrically conductive element 112 may contact the first electrical terminal 212 of the vacuum bag 200 and the second electrically conductive element 114 may contact the second electrical terminal 214 of the vacuum bag 200. Once the contacts have been established, the current can be supplied by the apparatus 100 to seal the vacuum bag 200 essentially vacuum-tight.

Although the above examples illustrate one conductive wire and respective electrical terminals and electrically conductive elements, it is to be understood that the present disclosure is not limited thereto. In particular, two or more conductive wires and respective sets of electrical terminals and electrically conductive elements can be provided in the vacuum bag.

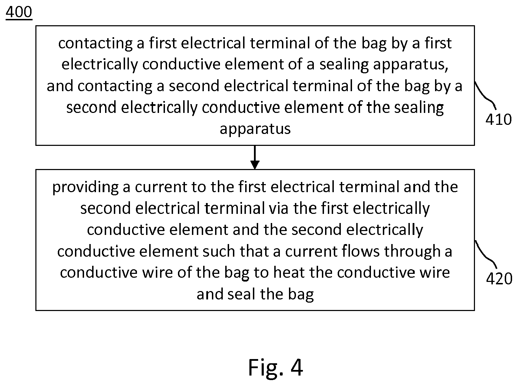

FIG. 4 shows a flowchart of a method 400 for sealing a vacuum bag according to embodiments described herein.

The method 400 includes in block 410 a contacting of a first electrical terminal of the vacuum bag by a first electrically conductive element of a sealing apparatus, and contacting a second electrical terminal of the vacuum bag by a second electrically conductive element of the sealing apparatus; and in block 420 a providing of a current to the first electrical terminal and the second electrical terminal via the first electrically conductive element and the second electrically conductive element such that a current flows through at least one conductive wire of the vacuum bag to heat the at least one conductive wire and seal the vacuum bag by heat.

In particular, two opposite sidewalls of the vacuum bag can be adhered to each other by applying heat via the at least one conductive wire. The at least one conductive wire may be embedded in one of the sidewalls of the vacuum bag.

According to the present disclosure, there is no heater in the sealing apparatus. Instead, the sealing apparatus has two electrically conductive elements which contact respective electrical terminals of the vacuum bag to supply a current to the vacuum bag. The current flows through electrical means of the vacuum bag, such as at least one conductive wire, whereby the electrical means is heated. The heat provided by the electrical means melts a part of the vacuum bag and the vacuum bag is sealed thereby essentially vacuum-tight.

The above configuration provides an improved energy efficiency of the sealing procedure and thus the apparatus. Further, the configuration is safer to operate and more reliable. Furthermore, malfunctions and maintenance costs of the sealing apparatus can be reduced.

While the foregoing is directed to embodiments of the disclosure, other and further embodiments of the disclosure may be devised without departing from the basic scope thereof, and the scope thereof is determined by the claims that follow.

## Claims

1. An apparatus (100) for sealing a vacuum bag (200), comprising:
a first electrically conductive element (112) and a second electrically conductive element (114) spaced apart from the first electrically conductive element (112),
wherein the first electrically conductive element (112) is configured to contact a first electrical terminal (212) of the vacuum bag (200) and the second electrically conductive element (114) is configured to contact a second electrical terminal (214) of the vacuum bag (200) to seal the vacuum bag (200).

2. The apparatus (100) of claim 1, wherein the apparatus (100) is configured such that an electrical current flows between the first electrically conductive element (112) and the second electrically conductive element (114) when the first electrically conductive element (112) and the second electrically conductive element (114) contact the first electrical terminal (212) and the second electrical terminal (214), respectively.

3. The apparatus (100) of claim 2, wherein the apparatus (100) is configured to provide the electrical current to heat at least one conductive wire (216) of the vacuum bag (200) to seal the vacuum bag (200).

4. The apparatus (100) of any one of claims 1 to 3, further comprising a power source connected to the first electrically conductive element (112) and the second electrically conductive element (114).

5. The apparatus (100) of any one of claims 1 to 4, wherein a distance between the first electrically conductive element (112) and the second electrically conductive element (114) is equal to, or less than, a width of the vacuum bag (200).

6. The apparatus (100) of any one of claims 1 to 5, wherein the distance between the first electrically conductive element (112) and the second electrically conductive element (114) is variable.

7. The apparatus (100) of any one of claims 1 to 6, wherein the first electrically conductive element (112) and the second electrically conductive element (114) are conductive plates.

8. The apparatus (100) of any one of claims 1 to 7, wherein the first electrically conductive element (112) and the second electrically conductive element (114) are provided at opposite sides of the apparatus (110).

9. A vacuum bag (200), comprising:
a first electrical terminal (212) and a second electrical terminal (214); and
at least one conductive wire (216) having a first end connected to the first electrical terminal (212) and a second end connected to the second electrical terminal (214),
wherein the at least one conductive wire (216) is configured to be heated by a current flowing between the first electrical terminal (212) and the second electrical terminal (214) to seal the vacuum bag (200).

10. The vacuum bag (200) of claim 9, wherein the vacuum bag (200) is configured to store food items.

11. The vacuum bag (200) of claim 9 or 10, wherein the at least one conductive wire (216) is embedded in a material of the vacuum bag (200).

12. The vacuum bag (200) of any of claims 9 to 11, wherein the vacuum bag (200) is made of a plastic material.

13. The vacuum bag (200) of any one of claims 9 to 12, wherein the first electrical terminal (212) and the second electrical terminal (214) are connectable to a first electrically conductive element (112) and a second electrically conductive element (114) of an apparatus (100) configured to provide the current for heating the at least one conductive wire (216).

14. The vacuum bag (200) of claim 13, wherein the apparatus (100) is the apparatus (100) of any one of claims 1 to 8.

15. A method (400) for sealing a vacuum bag, comprising:
contacting (410) a first electrical terminal of the vacuum bag by a first electrically conductive element of a sealing apparatus, and contacting a second electrical terminal of the vacuum bag by a second electrically conductive element of the sealing apparatus; and
providing (420) a current to the first electrical terminal and the second electrical terminal via the first electrically conductive element and the second electrically conductive element, such that a current flows through at lesat one conductive wire of the vacuum bag to heat the at least one conductive wire and seal the vacuum bag.
